# EUROPEAN PATENT APPLICATION

(11) **EP 4 312 414 A1**
(43) Date of publication of application: **31.01.2024**
(21) Application number: 22187850.7
(22) Date of filing: 29.07.2022
(51) Int. Cl.: H04L 41/14, H04L 41/16, H04L 9/40, H04L 41/40

(54) **SATISFYING TRUSTWORTHINESS REQUIREMENTS IN NETWORK DATA ANALYTICS AND MANAGEMENT DATA ANALYTICS**

(71) Applicant: Nokia Technologies Oy, 02610 Espoo (FI)
(72) Inventor: SUBRAMANYA, Tejas, Munich (DE); ALI-TOLPPA, Janne, Pirkkala (FI); GIUST, Fabio, Pullach (DE); MWANJE, Stephen, Dorfen (DE)
(74) Representative: Nokia EPO representatives

(57) **Abstract**

The present invention provides apparatuses, methods, computer programs, computer program products and computer-readable media for satisfying trustworthiness requirements in network data analytics and management data analytics. The method comprises receiving, from a second network entity, a request for data or training or analytics information, the request including information regarding a preferred level of trustworthiness of the data or training or analytics information, translating the received level of trustworthiness into trustworthiness of data or training or analytics configurations, reporting the trustworthiness of data or training or analytics configurations to the second entity.

## Description

### Field of the invention

Various example embodiments relate to apparatuses, methods, systems, computer programs, computer program products and computer-readable media for satisfying trustworthiness requirements in network data analytics and management data analytics.

### Abbreviations

- 3GPP 3^{rd}: Generation Partnership Project
- 5G 5^{th}: Generation
- ADRF: Analytics Data Repository Function
- AI: Artificial Intelligence
- API: Application Programmable Interface
- CPU: Central Processing Unit
- DCCF: Data Collection Coordination Function
- GAN: Generative Adversarial Networks
- HLEG: High Level Expert Group
- ISO: International Standardization Organization
- IEC: International Electrotechnical Commission
- LIME: Local interpretable model-agnostic explanations
- ML: Machine Learning
- MDAF: Management Data Analytics Function
- MFAF: Messaging Framework Adaptor Function
- NEF: Network Element Function
- NRF: Network Repository Function
- NWDAF: Network Data Analytics Function
- NWDAF AnLF: NWDAF Analytics logical function
- NWDAF MTLF: NWDAF Model Training logical function
- QoS: Quality of Service
- QoT: Quality of Trustworthiness
- SHAP: SHapley Additive exPlanations
- TAI: Trustworthy Artificial Intelligence
- TAIF: TAI Framework
- TED: Teaching Explainable Decisions
- TS: Technical Specification

### Background

For AI/ML systems to be widely accepted, they should be trustworthy in addition to their performance (e.g., accuracy). The European Commission has proposed the first-ever legal framework on AI, presenting new rules for AI to be Trustworthy (based on the risk levels), which the companies deploying mission-critical AI-based systems must adhere to in the near future. The High-level Expert Group (HLEG) group on AI has developed the European Commission's Trustworthy AI (TAI) strategy. In the deliverable 'Ethics Guidelines for Trustworthy AI' released in April 2019, the group has listed seven critical requirements that the AI systems should meet to be considered trustworthy.
1. Transparency: Include traceability, explainability and communication.
2. Diversity, non-discrimination and fairness: Include the avoidance of unfair bias, accessibility and universal design, and stakeholder participation.
3. Technical robustness and safety: Include resilience to attack and security, fallback plan and general safety, accuracy, reliability and reproducibility.
4. Privacy and data governance: Include respect for privacy, quality and integrity of data, and access to data.
5. Accountability: Include auditability, minimization and reporting of negative impact, trade-offs and redress.
6. Human agency and oversight: Include fundamental rights, human agency and human oversight.
7. Societal and environmental wellbeing: Include sustainability and environmental friendliness, social impact, society and democracy.

Additionally, International Organization for Standardization (ISO) / International Electrotechnical Commission (IEC) has also published a technical report on 'Overview of trustworthiness in artificial intelligence'. Early efforts in the open-source community are also visible towards developing TAI frameworks/tools/libraries such as IBM AI360, Google Explainable AI and TensorFlow Responsible AI.

In the following, there are introduce some key TAI definitions/algorithms/metrics described in the AI/ML research community.
1. Fairness: Fairness is the process of understanding bias introduced in the data, and ensuring the model provides equitable predictions across all demographic groups. It is important to apply fairness analysis throughout the entire AI/ML Pipeline, making sure to continuously re-evaluate the models from the perspective of fairness and inclusion. This is especially important when AI/ML is deployed in critical business processes that affect a wide range of end users. There are three broad approaches to detect bias in the AI/ML model:
   a. Pre-processing fairness - To detect bias in the AI/ML training data using algorithms such as Reweighing and Disparate impact remover.
   b. In-processing fairness - To detect bias in the AI/ML model generation using algorithms such as Prejudice Remover and Adversarial debiasing.
   c. Post-processing fairness - To detect bias in the AI/ML model decisions using algorithms such as Odds-equalizing and Reject option classification.
   Quantification of Fairness - There are several metrics that measure individual and group fairness. For example, Statistical Parity Difference, Average Odds Difference, Disparate Impact and Theil Index.
2. Explainability: Explainability of an AI/ML model refers to unveiling of the black box model which just makes the prediction or gives the recommendation to the White box which actually gives the details of the underlying mechanism and pattern identified by the model for a particular dataset. There are multiple reasons why it is necessary to understand the underlying mechanism of an AI/ML model such as human readability, justifiability, interpretability and bias mitigation. There are three broad approaches to design an ML model to be explainable:
   a. Pre-modelling explainability - To understand or describe data used to develop AI/ML models. For example, using algorithms such as ProtoDash and Disentangled Inferred Prior Variational Autoencoder Explainer.
   b. Explainable modelling/Interpretable modelling - To develop more explainable AI/ML models, e.g., ML models with joint prediction and explanation or surrogate explainable models. For example, using algorithms such as Generalized Linear Rule Models and Teaching Explainable Decisions (TED).
   c. Post-modelling explainability - To extract explanations from pre-developed AI/ML models. For example, using algorithms such as ProtoDash, Contrastive Explanations Method, Profweight, LIME and SHAP.

Furthermore, explanations can be local (i.e., explaining a single instance/prediction or global (i.e., explaining the global AI/ML model structure/predictions, e.g., based on combining many local explanations of each prediction)).

Quantification of Explainability - Although it is ultimately the consumer who determines the quality of an explanation, the research community has proposed quantitative metrics as proxies for explainability. There are several metrics that measure explainability such as Faithfulness and Monotonicity.

3. Robustness (adversarial): There are four adversarial threats that any AI/ML model developers/scientists need to consider defending and evaluating their AI/ML models and applications.
a. Evasion: Evasion attacks involves carefully perturbing the input samples at test time to have them misclassified. For example, using techniques such as Shadow attack and Threshold attack.
b. Poisoning: Poisoning is adversarial contamination of training data. Machine learning systems can be re-trained using data collected during operations. An attacker may poison this data by injecting malicious samples during operation that subsequently disrupt retraining. For example, using techniques such as Backdoor attack and Adversarial backdoor embedding.
c. Extraction: Extraction attacks aim to duplicate a machine learning model through query access to a target model. For example, using techniques such as KnockoffNets and Functionally equivalent extraction.
d. Inference: Inference attacks determine if a sample of data was used in the training dataset of an AI/ML model. For example, using techniques such as Membership inference black-box and attribute inference black-box.

In addition to adversarial robustness, there are other aspects of AI/ML technical robustness such as dealing with missing data, erroneous data, confidence levels of data, fallback plans etc., which needs to be addressed.

There are a number of approaches to defend AI/ML models against such adversarial attacks at each stage of the AI/ML design:
a. Preprocessor - For example, using techniques such as InverseGAN and DefenseGAN.
b. Postprocessor - For example, using techniques such as Reverse sigmoid and Rounding.
c. Trainer - For example, using techniques such as General adversarial training and Madry's protocol.
d. Transformer - For example, using techniques such as Defensive distillation and Neural cleanse.
e. Detector - For example, using techniques such as Detection based on activations analysis and Detection based on spectral signatures.

Quantification of Robustness: There are several metrics that measure robustness of ML models such as Empirical Robustness and Loss Sensitivity.

It is noted that the MLApp abstracts the exact nature of the entity related to ML, i.e. whether it is the ML Model itself or a function that applies an ML model, based on the internal terminology

3GPP has recognized the value of using AI/ML in mobile networks for the 5G standards. With these regards, 3GPP specifications define the Network Data Analytics Function (NWDAF) as the core network function responsible for generating analytics and providing them as a service to other Core Network Functions, Application Functions and OAM. For this purpose, NWDAF exposes the Nnwdaf_AnalyticsSubscription and Nnwdaf_AnalyticsInfo services. Similarly, 3GPP has defined the Management Data Analytics Services (MDAS) as the management services offered by a management function with analytics capabilities. Such a function is usually referred in informative clauses of the specifications and deployment options as Management Data Analytics Function (MDAF).

The analytics consumer subscribes to or requests for analytics information (i.e., statistical or predictions) from the analytics producer, i.e., Network Data Analytics Function (NWDAF) or Management Data Analytics Function (MDAF), by invoking the corresponding *analytics_subscribe* or *analytics_request* service operations. If the subscription to or request for analytics information corresponds to prediction and not statistical, the NWDAF or MDAF collects the necessary data, trains the ML model/app corresponding to the requested analytics and then deploys the ML model/app for inference. The NWDAF or MDAF notifies or responds to the analytics consumer with the analytics information by invoking the corresponding *analytics_notify* or *analytics_response* service operations, based on the request from the analytics consumer.

However, currently, there is no means for the analytics consumer to specify the 'preferred level of trustworthiness of the analytics' and/or 'preferred level of trustworthiness per analytics subset' when invoking the *Nnwdaf_AnalyticsSubscription_Subscribe* or *Nnwdaf_AnalyticsInfo_Request* service operation towards the NWDAF or when invoking the *MDARequest* service operation towards the MDAF.

Additionally, in the case of management plane, the AI/ML training consumer may request for training the model/app with specific performance requirements, which the AI/ML Training Producer needs to adhere to and provide the corresponding training report to the training consumer. However, there is no way for the AI/ML training consumer to specify the 'preferred level of trustworthiness of the training' when invoking the *AIMLTrainingRequest* service operation towards the AIMLTrainingFunction. Relatedly, there is no means for the training function to state the level of trustworthiness achieved by the training instance

Furthermore, considering the aforementioned challenges, the analytics producer or the training producer has no means for receiving, satisfying and verifying the preferred level of trustworthiness for the requested analytics or training.

It is to be noted, that the trustworthiness of the analytics is totally different from the performance of the analytics (as also set out above).

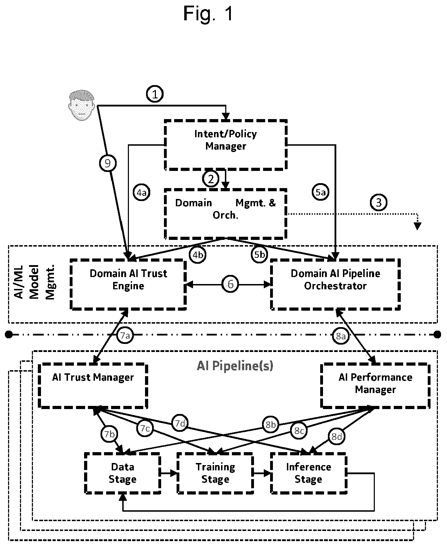

As to the main components of a Trusthworth AI Framework (TAIF) and the required interfaces, the main interface is called the T2, which is the interface between the vendor and use case specific AI Trust Manager and the potentially multi-vendor capable AI Trust Engine (as shown in Fig. 1). Its operations and notifications include APIs for capability discovery, configuration and reporting. However, there is currently no solution, how to introduce the required support for the trustworthiness in the analytics provided by the 3GPP Network Data Analytics Function (NWDAF) and 3GPP Management Data Analytics Function (MDAF) which is the focus of this invention, i.e., 7b, 7c and 7d interfaces, as shown in Fig. 1.

Below there are described the interfaces according to the number indicated in Fig. 1.
1 - Customer Intent (e.g., trust intent)
2 - Network QoS & network QoT requirements (e.g., SLA, RLA)
3 - Network service control (e.g., instantiate a network service)
4a & 4b - AI/ML Quality of Trustworthiness (QoT) requirement related to the network service (e.g., fairness)
5a & 5b - AI/ML Quality of Service (QoS) requirement related to the network service (e.g., accuracy)
6 - AI QoT vs AI QoS information exchange (e.g., to control tradeoff)
7a - AI pipeline trust control (e.g., set fairness level)
7b - Data trust control
7c - Training trust control
7d - Inference trust control
8a - AI pipeline performance control (e.g., set accuracy level)
8b - Data performance control (e.g., report training data statistics)
8c - Training performance control (e.g., report trained model accuracy)
8d - Inference performance control (e.g., report confidence of the prediction)
9 - Human-AI interface (e.g., provide human-readable AI/ML explanations)

### Summary

Various example embodiments aim at addressing at least part of the above issues and/or problems and drawbacks.

It is an object of various example embodiments to provide apparatuses, methods, systems, computer programs, computer program products and computer-readable media for satisfying trustworthiness requirements in network data analytics and management data analytics.

According to an aspect of various example embodiments there is provided a method for use in a first network entity, comprising:
receiving, from a second network entity, a request for data or training or analytics information, the request including information regarding a preferred level of trustworthiness of the data or training or analytics information;
translating the received level of trustworthiness into trustworthiness of data or training or analytics configurations,
reporting the trustworthiness of data or training or analytics configurations to the second entity.

According to another aspect of various example embodiments there is provided a method for use in a first network entity, comprising:
receiving, from a second network entity, a request for data or training or analytics information, the request including information regarding a preferred level of trustworthiness of the data or training or analytics information,
forwarding the information regarding the preferred level of trustworthiness of the data or training or analytics information via a third network entity to a fourth network entity,
receiving, from the fourth network entity, trustworthiness configurations for an inference stage,
preparing inference data satisfying the preferred level of trustworthiness using the trustworthiness configurations for the inference stage, and
reporting, to the second network entity, the requested data or training or analytics information according to the preferred level of trustworthiness of the data or training or analytics information.

According to an aspect of various example embodiments there is provided an apparatus for a first network entity, comprising:
means for receiving, from a second network entity, a request for data or training or analytics information, the request including information regarding a preferred level of trustworthiness of the data or training or analytics information;
means for translating the received level of trustworthiness into trustworthiness of data or training or analytics configurations,
means for reporting the trustworthiness of data or training or analytics configurations to the second entity.

According to another aspect of various example embodiments there is provided an apparatus for a first network entity, comprising:
means for receiving, from a second network entity, a request for data or training or analytics information, the request including information regarding a preferred level of trustworthiness of the data or training or analytics information,
means for forwarding the information regarding the preferred level of trustworthiness of the data or training or analytics information via a third network entity to a fourth network entity,
means for receiving, from the fourth network entity, trustworthiness configurations for an inference stage,
means for preparing inference data satisfying the preferred level of trustworthiness using the trustworthiness configurations for the inference stage, and
means for reporting, to the second network entity, the requested data or training or analytics information according to the preferred level of trustworthiness of the data or training or analytics information.

According to another aspect of the present invention there is provided a computer program product comprising code means adapted to produce steps of any of the methods as described above when loaded into the memory of a computer.

According to a still further aspect of the invention there is provided a computer program product as defined above, wherein the computer program product comprises a computer-readable medium on which the software code portions are stored.

According to a still further aspect of the invention there is provided a computer program product as defined above, wherein the program is directly loadable into an internal memory of the processing device.

According to an aspect of various example embodiments there is provided a computer readable medium storing a computer program as set out above.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Further aspects and features of the present invention are set out in the dependent claims.

### Brief Description of the Drawings

These and other objects, features, details and advantages will become more fully apparent from the following detailed description of various aspects/embodiments which is to be taken in conjunction with the appended drawings, in which:
Fig. 1 is a schematic diagram of an example of a system environment with interfaces and signaling variants according to example embodiments;
Fig. 2 is a schematic diagram illustrating an example of a NWDAF trustworthiness logical function (TwLF);
Fig. 3 is a schematic diagram illustrating an example of an AI/ML trustworthiness function;
Fig. 4 is a sequence diagram illustrating an example of a workflow for satisfying preferred level of trustworthiness using NWDAF TwLF logical function;
Fig. 5 is a schematic diagram illustrating an example of visualization-based explanations;
Fig. 6 is a schematic diagram illustrating an example of an explanation according to pre-processing fairness type 1;
Fig. 7 is a schematic diagram illustrating an example of an explanation according to pre-processing fairness type 2;
Fig. 8 is a schematic diagram illustrating an example of an explanation according to pre-processing defence / data imputation;
Fig. 9 is a schematic diagram illustrating an example of an explanation according to pre- and in-processing defence;
Fig. 10 is a schematic diagram illustrating an example of an explanation according to joint prediction and explanation;
Fig. 11 is a schematic diagram illustrating an example of an explanation according to model simplification;
Fig. 12 is a schematic diagram illustrating an example of an explanation according to in-processing fairness type 1;
Fig. 13 is a schematic diagram illustrating an example of an explanation according to in-processing fairness type 2;
Fig. 14 is a schematic diagram illustrating an example of text-based explanations;
Fig. 15 is a schematic diagram illustrating an example of example-based explanations;
Fig. 16 is a schematic diagram illustrating an example of contrastive explanations;
Fig. 17 is a schematic diagram illustrating an example of an explanation according to post-processing fairness type 1;
Fig. 18 is a schematic diagram illustrating an example of an explanation according to post-processing fairness type 2;
Fig. 19 is a sequence diagram illustrating an example of a workflow for satisfying preferred level of trustworthiness from analytics consumer using MDAF;
Fig. 20 is a sequence diagram illustrating an example of a workflow for satisfying preferred level of trustworthiness from training consumer using MDAF;
Fig. 21 is a flowchart illustrating an example of a method according to certain aspects of the present invention.
Fig. 22 is a flowchart illustrating another example of a method according to certain aspects of the present invention.
Fig. 23 is block diagram illustrating an example of an apparatus according to certain aspects of the present invention.
Fig. 24 is block diagram illustrating another example of an apparatus according to certain aspects of the present invention.
Fig. 25 is block diagram illustrating another example of an apparatus according to certain aspects of the present invention.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

Hereinafter, trustworthiness refers to a property of an AI/ML system which complies to the requirements defined by organizations such as the European Commission and ISO/IEC. According to certain aspects of various embodiments of the present invention, trustworthiness comprises fairness, explainability and robustness, as defined in the "Background" section.

According to certain aspects of various embodiments of the present invention, there is proposed a new functionality to enhance the AI/ML training and inference services including analytics services provided by any data analytics function (DAF), whose role is to produce analytics and to expose them as a service, with the ability to satisfy the preferred level of trustworthiness of the analytics when an analytics consumer invokes such services. The required trustworthiness level (e.g., "Low", "Medium", "High" or "Highest") may be determined by the AI/ML service or analytics service consumer based on their risk level, i.e., minimal risk, low risk, high risk or unacceptable risk, as defined in the legal framework for AI proposed by the European Commission.

The trustworthiness of the AI/ML or analytics may be associated to the data that is being used to train the ML model/app in the analytics producer and/or to the ML model/app being trained in the analytics producer and/or to the inference generated by the deployed ML model/app in the analytics producer. Furthermore, the trustworthiness requirements for the analytics may optionally include the following individual properties (more details on each of these individual properties are mentioned below):
- Preferred level of explainability ("Low", "Medium", "High" or "Highest"). The explainability may be associated to the data that is being used to train the ML model/app in the analytics producer and/or to the ML model/app being trained in the analytics producer and/or to the inference generated by the deployed ML model/app in the analytics producer.
- Preferred level of fairness ("Low", "Medium", "High" or "Highest"). The fairness may be associated to the data that is being used to train the ML model/app in the analytics producer and/or to the ML model/app being trained in the analytics producer and/or to the inference generated by the deployed ML model/app in the analytics producer.
- Preferred level of robustness ("Low", "Medium", "High" or "Highest"). The robustness is associated to the data (e.g., missing data, malicious data) that is being used to train the ML model/app in the analytics producer.

When a preferred level of explainability and/or fairness and/or robustness is expressed for a given AI/ML or analytics service, it takes precedence over the above preferred level of trustworthiness of the AI/ML or analytics service. If only preferred level of trustworthiness is expressed for a given AI/ML or analytics service, the same level applies to explainability, fairness and robustness aspects of trustworthiness.

Additionally, there are also provided means to store the generated explanations related to the dataset/model/predictions in the AI/ML or analytics service producer and to allow the AI/ML or analytics service consumer to retrieve those historical explanations for a given target period. It is to be noted that the explanations related to the internals of the ML model/app may be consumed only by the NWDAF that generated those explanations because of the intellectual property associated with the ML model/app internals.

As to the usage in 3GPP standards, the following is noted.

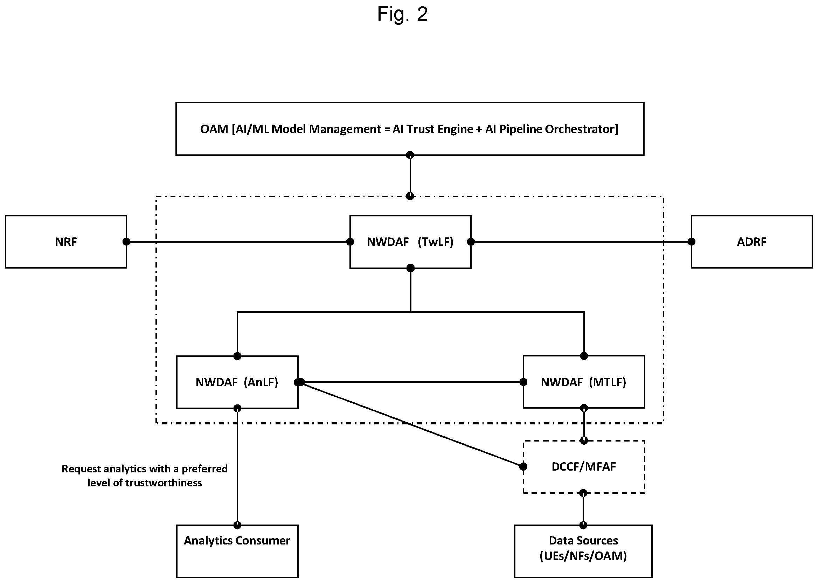

Regarding 3GPP SA2, certain aspects of various embodiments of the present invention introduce a new NWDAF Trustworthiness Logical Function (TwLF) to satisfy the 'preferred level of trustworthiness of the analytics' and/or 'preferred level of trustworthiness per analytics subset' when an analytics consumer invokes the Nnwdaf_AnalyticsSubscription_Subscribe or Nnwdaf_AnalyticsInfo_Request service operation towards the NWDAF AnLF, as shown in Fig. 2.

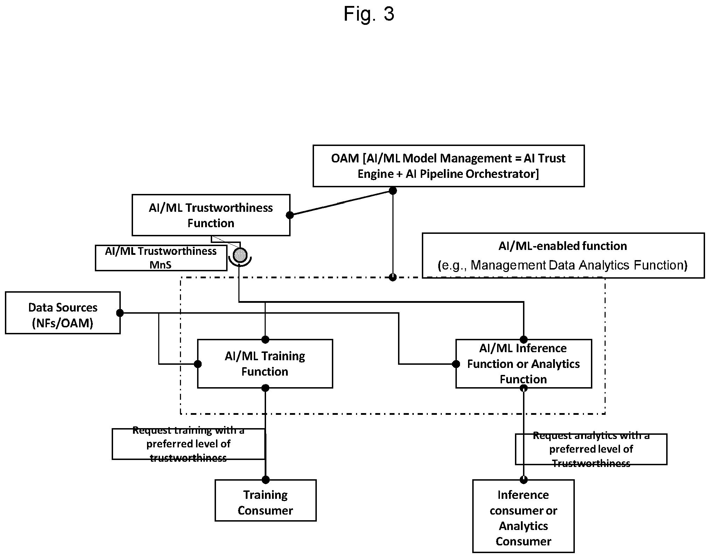

Regarding 3GPP SA5, certain aspects of various embodiments of the present invention introduce a new AI/ML Trustworthiness function to satisfy the 'preferred level of trustworthiness of the analytics' when an analytics consumer invokes the MDARequest service operation towards the MDAFunction or when the AI/ML training consumer invokes the AIMLTrainingRequest service operation towards the AIMLTrainingFunction, as shown in Fig. 3. The AI/ML Trustworthiness function may either be a third-party entity or may be part of the MDA functionor the AI/ML enabled function.

In both the aforementioned cases, the functionality comprises:
- The ability for a consumer to request a 'preferred level of trustworthiness' for the training or inference (e.g. analytics) services provided by an AI/ML or analytics service producer.
- the ability for the AI/ML or analytics service producer to receive and process the request of the analytics consumer and/or AI/ML training consumer containing the preferred level of trustworthiness;
- a set of metrics to define a 'preferred or achieved level of trustworthiness' for the training or inference (e.g. analytics) services provided by an AI/ML or analytics service producer
- the ability to execute the necessary steps, with the support of newly introduced trustworthiness functions, in order to satisfy the request for a 'preferred level of trustworthiness', e.g, based on the trustworthiness related algorithms/metrics (as illustrated below in detail);
- the ability for the AI/ML or analytics service producer to report on towards one or more AI/ML or analytics service consumers the achieved level of trustworthiness' for the training or inference (e.g. analytics) services provided by an AI/ML or analytics service producer;
- a service offered to analytics consumer and/or AI/ML training consumer which enables them to send the request and receive further information about trustworthiness of analytics/training.

The preferred level of trustworthiness can be translated into three aspects by the NWDAF or the MDAF: preferred level of explainability, preferred level of fairness and preferred level of robustness. Alternatively, the analytics consumer and/or the AI/ML training consumer may directly specify the preferred level of explainability, preferred level of fairness and preferred level of robustness to the NWDAF or the MDAF.

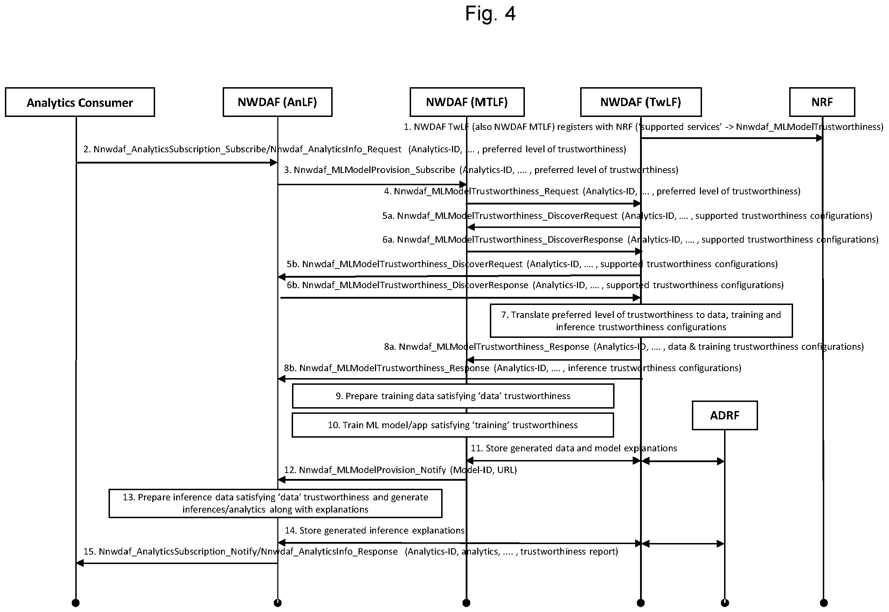

Regarding 3GPP SA2, Fig. 4 shows the sequence diagram illustrating on how the analytics consumer can specify the preferred level of trustworthiness to the NWDAF and how the NWDAF can satisfy them. In the following, the steps illustrated in Fig. 4 will be explained in detail.

Step 1: The NWDAF TwLF and NWDAF MTLF registers the new supported services related to ML model trustworthiness in the NRF. The supported services may include:
- Nnwdaf_MLModelTrustworthiness_Request
- (optional) Nnwdaf_MLModelTrustworthiness_DiscoverRequest
- (optional) Nnwdaf_MLModelTrustworthiness_DiscoverResponse
- Nnwdaf_MLModelTrustworthiness_Response

Step 2: The analytics consumer invokes Nnwdaf_AnalyticsSubscription_Subscribe or Nnwdaf_AnalyticsInfo_Pequest service operation towards the NWDAF AnLF, for a particular analytics ID, including the preferred level of trustworthiness ("Low", "Medium", "High" or "Highest"). Optionally, the preferred level of trustworthiness may be associated to the data and/or training and/or inference stage(s) of the ML model/app.

Step 3: The NWDAF AnLF invokes Nnwdaf_MLModelProvision_Subscribe service operation towards the NWDAF MTLF, for the analytics ID from step 2, including the preferred level of trustworthiness ("Low", "Medium", "High" or "Highest").

Step 4: The NWDAF MTLF invokes Nnwdaf_MLModelTrustworthiness_Request service operation towards the NWDAF TwLF by including the preferred level of trustworthiness for the analytics ID from step 2 to obtain the trustworthiness configurations for data, training and inference stages.

Steps 5a and 5b (optional): The NWDAF TwLF invokes Nnwdaf_MLModelTrustworthiness_DiscoverRequest service operation towards the NWDAF MTLF and NWDAF AnLF to discover the supported trustworthiness configurations for data, training and inference stages for the analytics ID.

Steps 6a and 6b (optional): The NWDAF MTLF and NWDAF AnLF invokes Nnwdaf_MLModelTrustworthiness_DiscoverResponse service operation towards the NWDAF TwLF to inform about the supported trustworthiness configurations for data, training and inference stages for the analytics ID.

Step 7: The NWDAF TwLF translates the preferred level of trustworthiness received in step 4 into individual data, training and inference trustworthiness configurations.

Steps 8a and 8b: The NWDAF TwLF invokes Nnwdaf_MLModelTrustworthiness_Pesponse service operation towards the NWDAF MTLF and NWDAF AnLF to inform the trustworthiness configurations for data, training and inference stages that the NWDAF MTLF and NWDAF AnLF should apply to satisfy the preferred level of trustworthiness for the analytics ID.

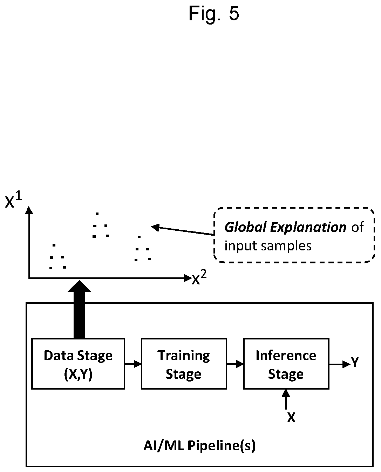

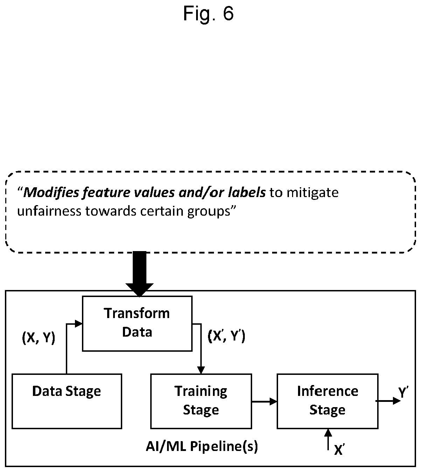

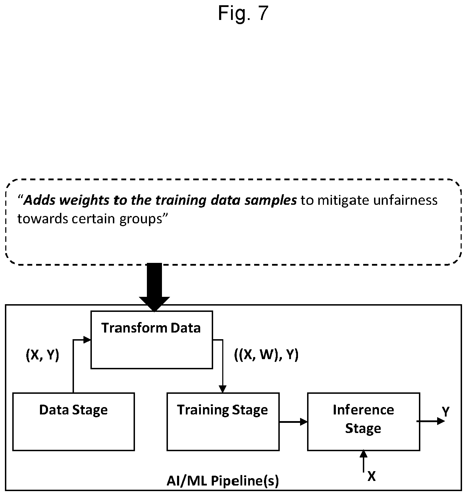

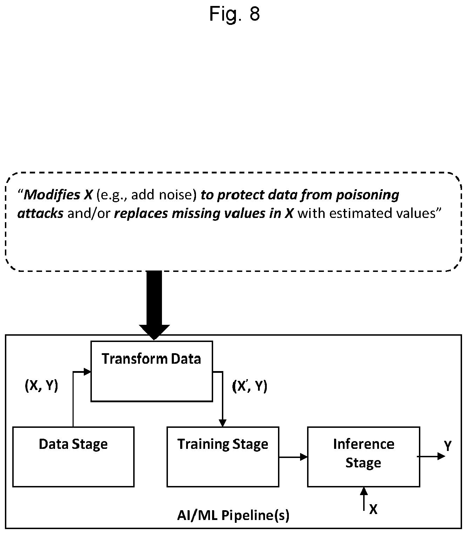

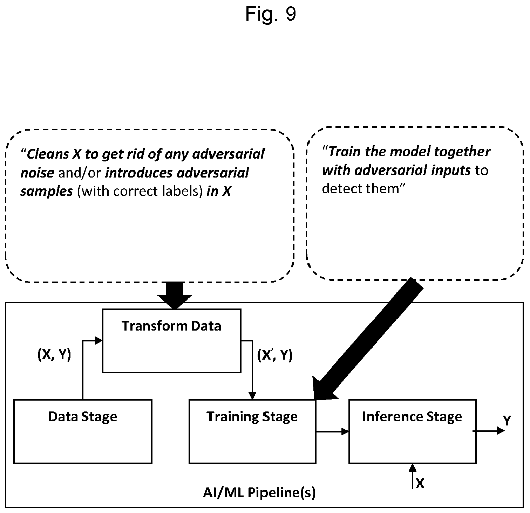

Step 9: The NWDAF MTLF generates dataset satisfying the preferred level of data trustworthiness as requested by the NWDAF TwLF.
- If data trustworthiness includes data explanations, for e.g., visualization based explanations (as shown in Figure 5) may be generated to provide the global explanation of input data samples used to train the ML model/app.
- If data trustworthiness includes data fairness, for e.g., dataset used to train the ML model/app may be modified to mitigate unfairness towards certain groups (as shown in Figures 6 and 7).
- If data trustworthiness includes data robustness, for e.g., missing values in the dataset used to train the ML model/app may be replaced with estimated values (as shown in Figure 8) or adversarial samples may be added to the dataset with correct labels and train the model together with adversarial inputs (as shown in Figure 9).

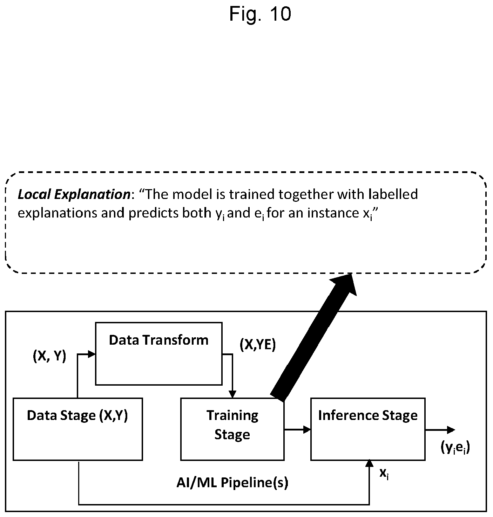

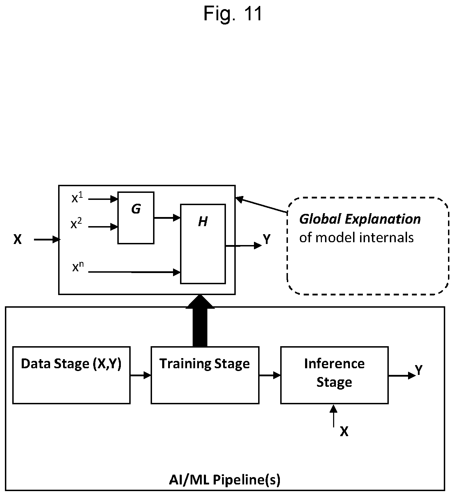

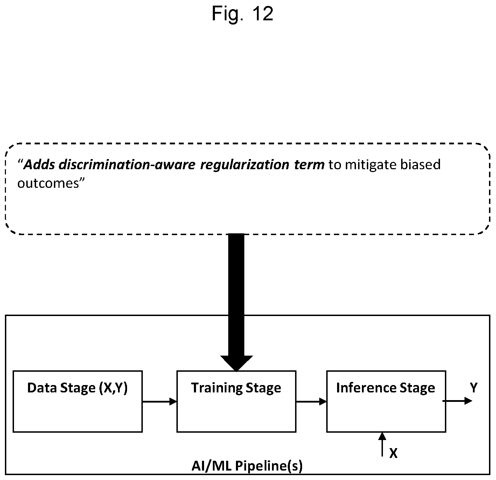

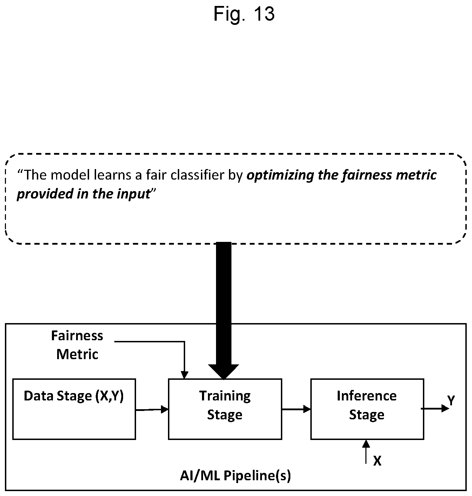

Step 10: The NWDAF MTLF trains the ML model/app to satisfy the preferred level of training trustworthiness as requested by the NWDAF TwLF.
- If training trustworthiness includes training explanations, the ML model/app may be trained to generate explanations along with the predictions. For example, Teaching Explainable Decisions (TED) supports training an ML model/app together with labelled explanations and such a trained ML model/app can predict both the label and an explanation for an inference data sample (as shown in Figure 10). Another example includes generating global explanation of the internals of a trained ML model/app using algorithms such as ProfWeight (as shown in Figure 11).
- If training trustworthiness includes training fairness, for e.g., the ML model/app may be trained to mitigate biased outcomes by adding a discrimination aware regularization term (as shown in Figure 12) or the ML model/app (as shown in Figure 13) may be trained to learn a fair classifier to optimize the fairness metric provided in the input.

Step 11: The global data and training explanations generated in steps 9 and 10 are sent to NWDAF TwLF which may further store in ADRF. The analytics consumer may request historical explanations via DCCF by invoking the Ndccf_DataManagement_Subscribe (Service_Operation, Data Specification, Time Window, Formatting Instructions, Processing Instructions, ADRF ID or NWDAF ID (or ADRF Set ID or NWDAF Set ID)) service operation as specified in 3GPP TS 23.288 clause 8.2.2. The analytics consumer may specify one or more notification endpoints to receive the data.

"Service_Operation" is the service operation used to acquire the explanations from the explanations source. "Explanation Specification" provides Service_Operation-specific parameters (e.g. event IDs, UE-ID(s), local/global/aggregated explanations) used to retrieve the explanations. "Time Window" specifies a past time period and comprises a start and stop time. "Formatting and Processing Instructions" are as defined in clause 5A4. The data consumer may optionally include the ADRF or NWDAF instance (or ADRF Set or NWDAF Set) ID where the stored explanations reside.

The ADRF sends the requested explanations (e.g. one or more stored notifications archived from the explanations source) to the analytics consumer via the DCCF. The explanations may be sent in one or more notification messages.

Step 12: The NWDAF MTLF invokes Nnwdaf_MLModelProvision_Notify service operation to notify the NWDAF AnLF about the URL of the trained model satisfying the preferred level of trustworthiness.

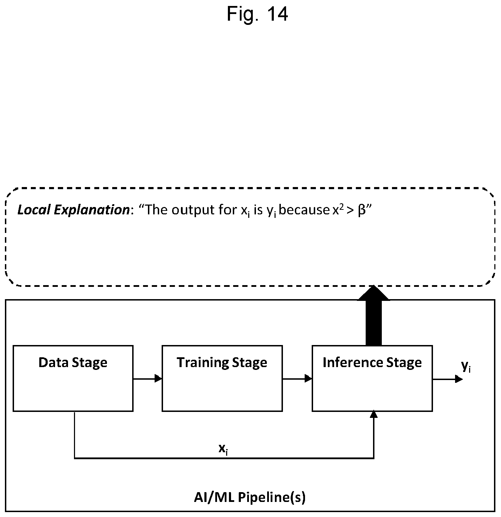

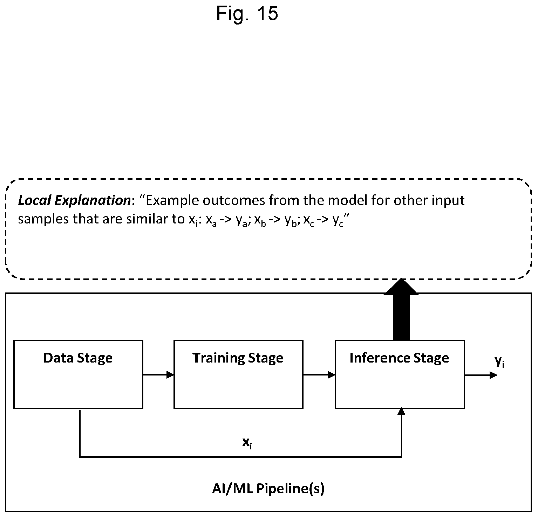

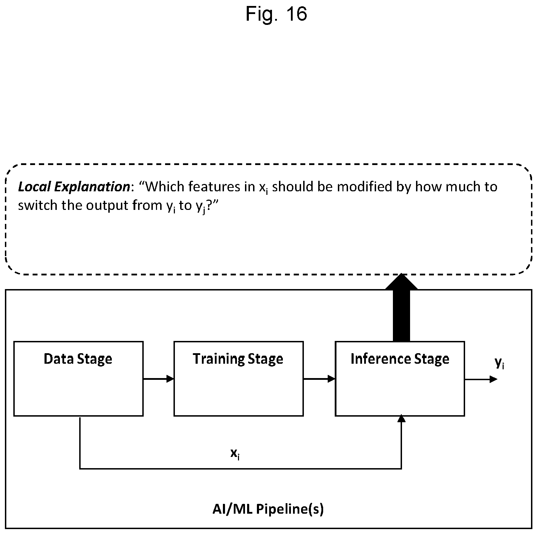

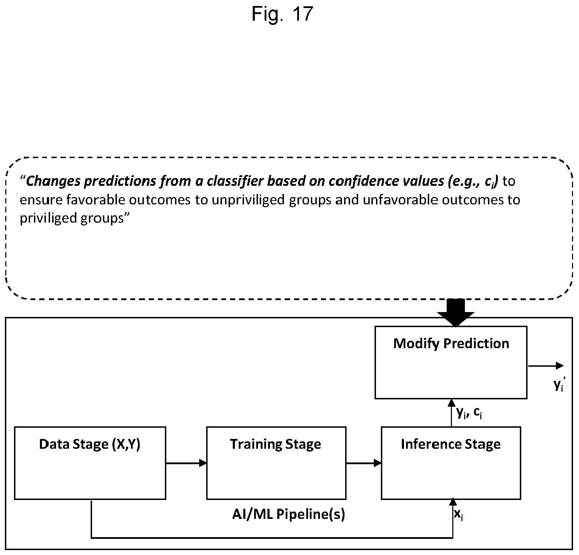

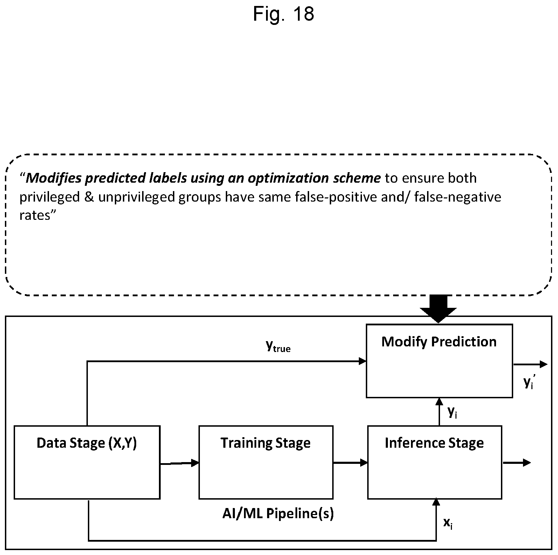

Step 13: The NWDAF AnLF prepares the inference data to satisfy the preferred level of data trustworthiness using trustworthiness configurations indicated in step 8b and then deploys the ML model/app to generate inferences/analytics for the requested analytics-ID along with corresponding local explanations.
- If inference trustworthiness includes inference explanations, for e.g., text based explanations may be generated (as shown in Figure 14), examples-based explanations may be generated (as shown in Figure 15), contrastive explanations may be generated (as shown in Figure 16).
- If inference trustworthiness includes inference fairness, for e.g., predictions may be modified based on confidence values to ensure favorable outcomes to unprivileged groups and unfavorable outcomes to privileged groups (as shown in Figure 17) or predictions may be modified using an optimization scheme to ensure both privileged and unprivileged groups have same false-positive and false-negative rates (as shown in Figure 18).

Step 14: Similar to step 11, the generated local inference explanations are sent to NWDAF TwLF which may further store them in ADRF so that the analytics consumer may retrieve the stored explanations at a later time.

Step 15: The NWDAF AnLF notifies or responds to the analytics consumer with the requested analytics along with the corresponding trustworthiness reports by invoking the Nnwdaf_AnalyticsSubscription_Notify or Nnwdaf_AnalyticsInfo_Pesponse service operation.

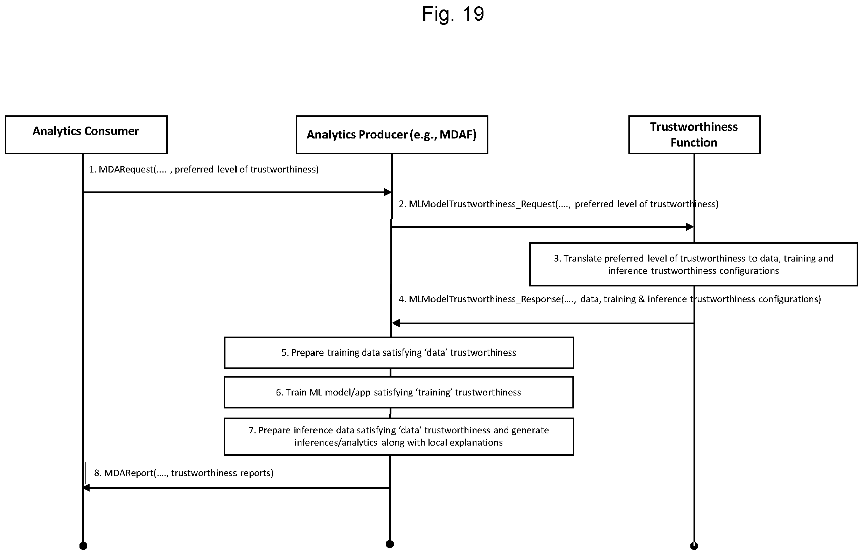

In the following, another aspect of certain embodiments of the present invention regarding trustworthiness for Analytics generation in 3GPP SA5 is described with respect to Figure 19. The steps illustrated in Fig. 19 will be explained in detail.

Step 1: The analytics consumer creates a request for analytics via createMOI operation on the MDARequest towards the MDAF, for a particular analytics ID, including the preferred level of trustworthiness ("Low", "Medium", "High" or "Highest"). In this case, the preferred level of trustworthiness may be associated to the data, training and/or inference stage(s) of the analytics generation process.

Step 2: The MDAF requests from the Trustworthiness Function for trustworthiness configurations stating the preferred level of trustworthiness ("Low", "Medium", "High" or "Highest").

Step 3: The Trustworthiness Function translates the preferred level of trustworthiness received in step 2 into individual data, training and inference trustworthiness configurations.

Step 4: The Trustworthiness Function consumes configuration management services on the MDAF to configure the trustworthiness configurations for data, training and inference stages that the MDAF should apply to satisfy the preferred level of trustworthiness for the analytics ID.

Step 5: The MDAF generates dataset satisfying the preferred level of data trustworthiness as requested by the Trustworthiness Function.

Step 6: The MDAF trains the ML model/app satisfying the preferred level of training trustworthiness as configured by the Trustworthiness Function.

Step 7: The MDAF prepares the inference data to satisfy the preferred level of data trustworthiness using trustworthiness configurations indicated in step 4 and then applies them to the ML model/app to generate inferences/analytics for the requested analytics-ID along with local explanations.

Step 8: The MDAF notifies or responds to the analytics consumer with the requested analytics along with the corresponding trustworthiness reports (including data, training and inference explanations generated in steps 5, 6 and 7) by invoking the MDAReport service operation.

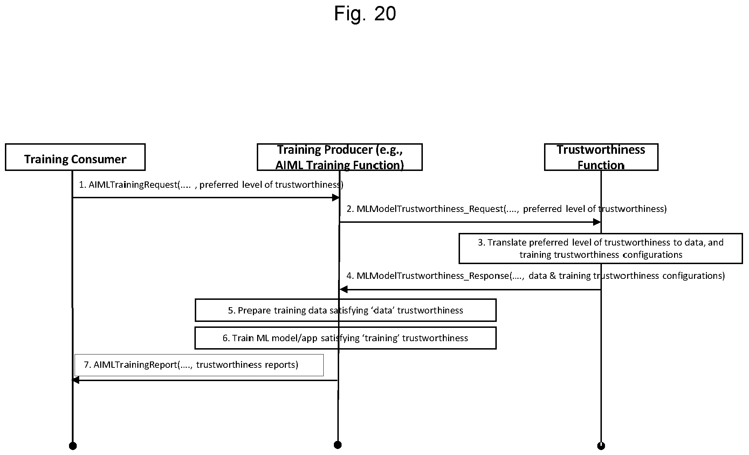

In the following, another aspect of certain embodiments of the present invention regarding trustworthiness for for AI/ML Training in 3GPP SA5 is described with respect to Figure 20. The steps illustrated in Fig. 20 will be explained in detail.

To support trustworthiness for AI/ML Training, it is proposed to have capability within the AI/ML training function (or a separate Trustworthiness Function) that:
- Receives a request from a training a consumer, the request stating a 'preferred level of trustworthiness' expressed in terms of a desiredDataTrustworthinessMetric/ desiredModelTrustworthinessMetric and a desiredDataTrustworthinessScore/ desiredModelTrustworthinessScore.

- processes the request stating a 'preferred level of trustworthiness' by executing a set of actions(as summarized below) to achieve the stated desired level of trustworthiness;
- reports towards one or more AI/ML service consumers the achieved level of trustworthiness' expressed in terms of a achieved DataTrustworthinessMetric/achievedModelTrustworthinessMetric and a achievedDataTrustworthinessScore/achievedModelTrustworthinessScore as defined below.

The steps illustrated in Fig. 20 taken to support the level of trustworthiness and definitions of the metrics and scores are as follows.

Step 1: The training consumer creates a request for training an AI/ML Model via createMOI operation on the AIMLTrainingRequest towards the AIMLTraining Function, for a particular AI/ML Model or AI/ML app, including the preferred level of trustworthiness ("Low", "Medium", "High" or "Highest"). In this case, the preferred level of trustworthiness may be associated to the data and/or training stage(s) of the AI/MLTraining process. The data type for preferred level of trustworthiness is defined later.

Step 2: The AI/MLTraining Function requests from the Trustworthiness Function for trustworthiness configurations stating the preferred level of trustworthiness ("Low", "Medium", "High" or "Highest").

Step 3: The Trustworthiness Function translates the preferred level of trustworthiness received in step 2 into individual data and training trustworthiness configurations.

Step 4: The Trustworthiness Function consumes configuration management services on the AI/MLTraining Function to configure the trustworthiness configurations for data and training stages that the AI/MLTraining Function should apply to satisfy the preferred level of trustworthiness for the analytics ID.

Step 5: The AI/MLTraining Function generates dataset satisfying the preferred level of data trustworthiness as requested by the Trustworthiness Function.

Step 6: The AI/MLTraining Function trains the ML model/app satisfying the preferred level of training trustworthiness as configured by the Trustworthiness Function.

Step 7: The trustworthiness reports (including data and training explanations) generated in steps 5 and 6 may be sent to the training consumer. The data type for trustworthiness report is defined later.

In the following tables, there are provided some examples of data types for preferred level of trustworthiness according to certain aspects of embodiments of the present invention.

### (i) DataTrustworthiness <<datatype>>

Definition: This data type specifies the trustworthiness of the training data used to train a particular AI/ML model/app.

| **Attribute name** | **Description** | **isRead able** | **isWrit able** | **isInva riant** | **isNotif yable** |
|---|---|---|---|---|---|
| desiredDataTrust worthinessScore | It indicates the trustworthiness score (in unit of percentage) of a particular training data set using to train the AI/ML model. The trustworthiness metrics may be different for different kinds of AI/ML models depending on the nature of the model. | T(RUE) | F(ALS E) | F | T |
| desiredDataTrust worthinessMetric | It indicates the trustworthiness metric used to evaluate the trustworthiness of the training data. | T | F | F | T |

### (ii) ModelTrustworthiness <<datatype>>

Definition: This data type specifies the trustworthiness of a particular AI/ML model/app when performing training.

| **Attribute name** | **Description** | **isRead able** | **isWrit able** | **isInva riant** | **isNotif yable** |
|---|---|---|---|---|---|
| desiredModelTrustworthin essScore | It indicates the trustworthiness score (in unit of percentage) of a particular AI/ML model when performing training on a specific data set. The trustworthiness metrics may be different for different kinds of AI/ML models depending on the nature of the model. | T | F | F | T |
| desiredModelTrustworthin essMetric | It indicates the trustworthiness metric used to evaluate the trustworthiness of the AI/ML model. | T | F | F | T |

In the following tables, there are provided some examples of data types for trustworthiness reports according to certain aspects of embodiments of the present invention.

Data type for trustworthiness reports:
(i) DataTrustworthinessTraining <<datatype>>

| **Attribute name** | **Description** | **isRead able** | **isWrit able** | **isInva riant** | **isNotif yable** |
|---|---|---|---|---|---|
| achievedDataTru stworthinessSco re | It indicates the trustworthiness score (in unit of percentage) of a particular training data set using to train the AI/ML model. The trustworthiness metrics may be different for different kinds of AI/ML models depending on the nature of the model. | T | F | F | T |
| achievedDataTru stworthinessMet ric | It indicates the achieved trustworthiness metric based on the evaluation of the trustworthiness of the training data. | T | F | F | T |

(ii) ModelTrustworthinessTraining <<datatype>>

| **Attribute name** | **Description** | **isReadabl e** | **isWritable** | **islnvarian t** | **isNotify able** |
|---|---|---|---|---|---|
| achieved ModelTrustworthi nessScore | It indicates the trustworthiness score (in unit of percentage) of a particular AI/ML model when performing training on a specific data set. The trustworthiness metrics may be different for different kinds of AI/ML models depending on the nature of the model. | T | F | F | T |
| achieved ModelTrustworthi nessMetric | It indicates the achieved trustworthiness metric based on the evaluation of the trustworthiness of the AI/ML model. | T | F | F | T |

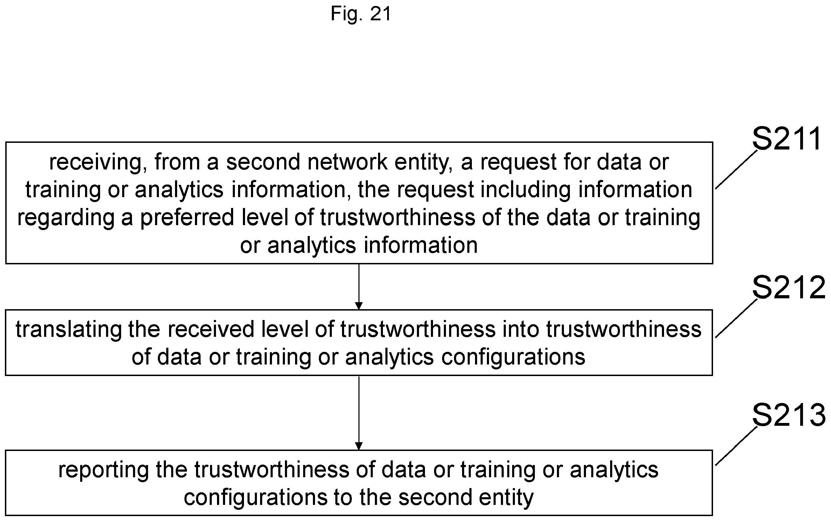

In the following, a more general description of example versions of the present invention is made with respect to Figs. 21 to 25.

Fig. 21 is a flowchart illustrating an example of a method according to some example versions of the present invention.

According to example versions of the present invention, the method may be implemented in or may be part of a first network entity. The method comprises receiving (S211), from a second network entity, a request for data or training or analytics information, the request including information regarding a preferred level of trustworthiness of the data or training or analytics information, translating (S212) the received level of trustworthiness into trustworthiness of data or training or analytics configurations, and reporting (S213) the trustworthiness of data or training or analytics configurations to the second entity.

According to some example versions of the present invention, the method further comprises registering, by the first network entity, its capabilities to receive the request for data or training or analytics information to a third network entity, the request including a preferred level of trustworthiness of the data or training or analytics information.

According to some example versions of the present invention, the method further comprises sending, by the first network entity, a request for discovering supported trustworthiness of data or training or analytics configurations to the second network entity, and receiving information regarding the supported trustworthiness of data or training or analytics configurations from the second network entity.

According to some example versions of the present invention, the trustworthiness of data or training or analytics configurations include individual data and/or training and/or inference trustworthiness configurations.

According to some example versions of the present invention, the preferred level of trustworthiness of data or training or analytics configurations is associated to data and/or training and/or inference stage(s) of a machine learning pipeline.

According to some example versions of the present invention, the preferred level of trustworthiness of data or training or analytics configurations includes at least one of a preferred level of explainability, a preferred level of fairness, and a preferred level of robustness.

According to some example versions of the present invention, the method further comprises receiving explanations from the second network entity; and storing the received explanations in a database, wherein the explanations are explanations related to a training dataset and explanations related to a model satisfying the preferred level of trustworthiness of data or training or analytics configurations, or the explanations are explanations related to an inference dataset and explanations related to model inferences satisfying the preferred level of trustworthiness of data or training or analytics configurations.

According to some example versions of the present invention, the first entity is a trustworthiness logical function, and the third entity is a network repository logical function in a mobile telecommunications network system.

According to some example versions of the present invention, the first entity is a trustworthiness logical function, and the second entity is an analytics logical function in a mobile telecommunications network system.

According to some example versions of the present invention, the first entity is a trustworthiness logical function, and the second entity is a model training logical function in a mobile telecommunications network system.

According to some example versions of the present invention, the first entity is a trustworthiness function, and the second entity is a management data analytics function in a mobile telecommunications network system.

According to some example versions of the present invention, the first entity is a trustworthiness function, and the second entity is an artificial intelligence/machine learning training producer in a mobile telecommunications network system.

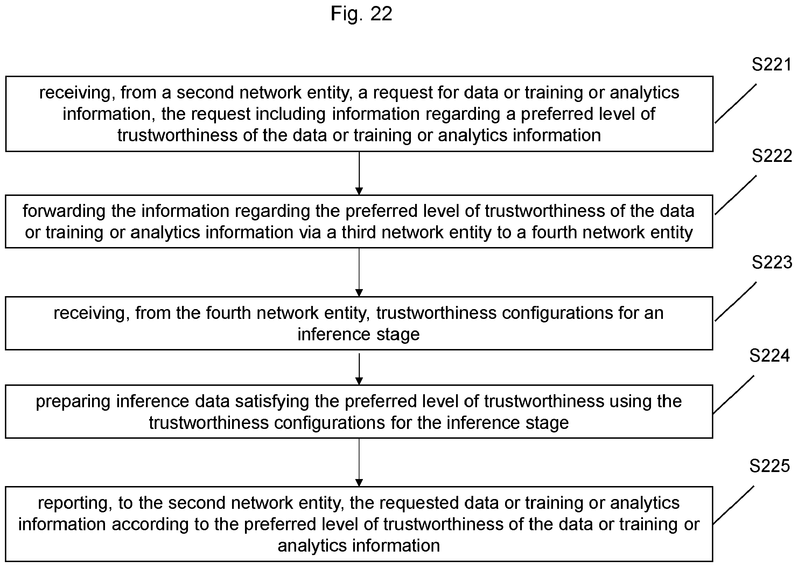

Fig. 22 is a flowchart illustrating another example of a method according to some example versions of the present invention.

According to another example version of the present invention, the method may be implemented in or may be part of a first network entity. The method comprises receiving (S221), from a second network entity, a request for data or training or analytics information, the request including information regarding a preferred level of trustworthiness of the data or training or analytics information, forwarding (S222) the information regarding the preferred level of trustworthiness of the data or training or analytics information via a third network entity to a fourth network entity, receiving (S223), from the fourth network entity, trustworthiness configurations for an inference stage, preparing (S224) inference data satisfying the preferred level of trustworthiness using the trustworthiness configurations for the inference stage, and reporting (S225), to the second network entity, the requested data or training or analytics information according to the preferred level of trustworthiness of the data or training or analytics information.

According to some example versions of the present invention, the method further comprises receiving, from the fourth network entity, a request for discovering supported trustworthiness of data or training or analytics configurations, and sending, to the fourth network entity, information regarding the supported trustworthiness of data or training or analytics configurations.

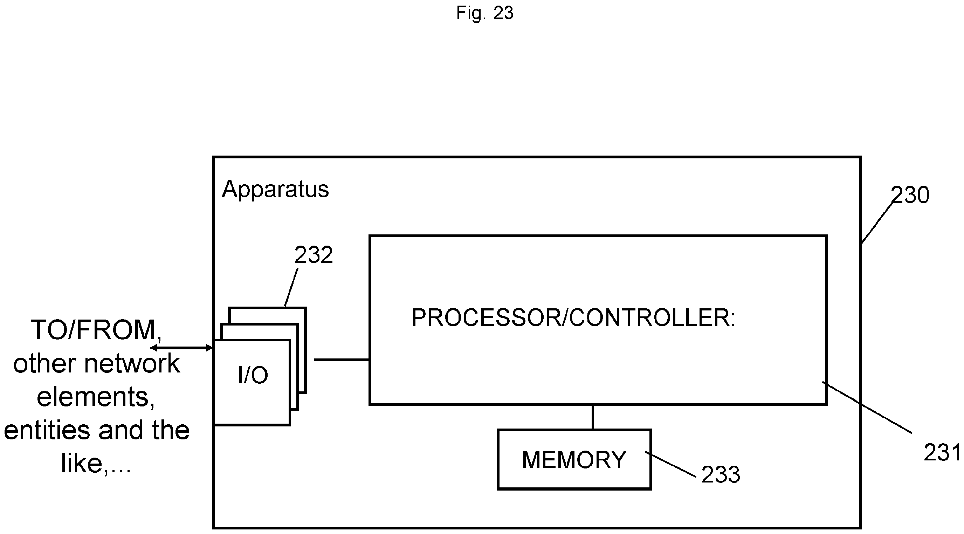

Fig. 23 is a block diagram illustrating another example of an apparatus according to some example versions of the present invention.

In Fig. 23, a block circuit diagram illustrating a configuration of an apparatus 230 is shown, which is configured to implement the above described various aspects of the invention. It is to be noted that the apparatus 230 shown in Fig. 23 may comprise several further elements or functions besides those described herein below, which are omitted herein for the sake of simplicity as they are not essential for understanding the invention. Furthermore, the apparatus may be also another device having a similar function, such as a chipset, a chip, a module etc., which can also be part of an apparatus or attached as a separate element to the apparatus, or the like.

The apparatus 230 may comprise a processing function or processor 231, such as a CPU or the like, which executes instructions given by programs or the like. The processor 231 may comprise one or more processing portions dedicated to specific processing as described below, or the processing may be run in a single processor. Portions for executing such specific processing may be also provided as discrete elements or within one or further processors or processing portions, such as in one physical processor like a CPU or in several physical entities, for example. Reference sign 232 denotes transceiver or input/output (I/O) units (interfaces) connected to the processor 231. The I/O units 232 may be used for communicating with one or more other network elements, entities, terminals or the like. The I/O units 232 may be a combined unit comprising communication equipment towards several network elements, or may comprise a distributed structure with a plurality of different interfaces for different network elements. The apparatus 230 further comprises at least one memory 233 usable, for example, for storing data and programs to be executed by the processor 231 and/or as a working storage of the processor 231.

The processor 231 is configured to execute processing related to the above-described aspects.

In particular, the apparatus 230 may be implemented in or may be part of a first network entity, and may be configured to perform processing as described in connection with Figs. 21 and 22.

Thus, according to some example versions of the present invention, there is provided an apparatus 230 for a first network entity, comprising at least one processor 231, and at least one memory 233 for storing instructions to be executed by the processor 231, wherein the at least one memory 233 and the instructions are configured to, with the at least one processor 231, cause the apparatus 230 at least to perform receiving, from a second network entity, a request for data or training or analytics information, the request including information regarding a preferred level of trustworthiness of the data or training or analytics information, translating the received level of trustworthiness into trustworthiness of data or training or analytics configurations, reporting the trustworthiness of data or training or analytics configurations to the second entity.

Further, according to some example versions of the present invention, there is provided an apparatus 230 for a first network entity, comprising at least one processor 231, and at least one memory 233 for storing instructions to be executed by the processor 231, wherein the at least one memory 233 and the instructions are configured to, with the at least one processor 231, cause the apparatus 230 at least to perform receiving, from a second network entity, a request for data or training or analytics information, the request including information regarding a preferred level of trustworthiness of the data or training or analytics information, forwarding the information regarding the preferred level of trustworthiness of the data or training or analytics information via a third network entity to a fourth network entity, receiving, from the fourth network entity, trustworthiness configurations for an inference stage, preparing inference data satisfying the preferred level of trustworthiness using the trustworthiness configurations for the inference stage, and reporting, to the second network entity, the requested data or training or analytics information according to the preferred level of trustworthiness of the data or training or analytics information.

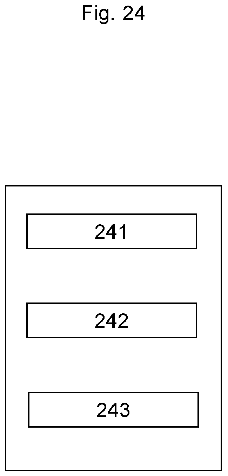

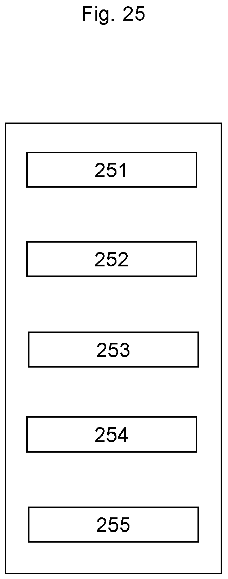

Further, the present invention may be implement by an apparatus for a first network entity comprising means for preforming the above-described processing, as shown in Figs. 24 and 25.

That is, according to some example versions of the present invention, as shown in Fig. 24, the apparatus for a first network entity comprises means for receiving (241), from a second network entity, a request for data or training or analytics information, the request including information regarding a preferred level of trustworthiness of the data or training or analytics information, means for translating (242) the received level of trustworthiness into trustworthiness of data or training or analytics configurations, and means for reporting (243) the trustworthiness of data or training or analytics configurations to the second entity.

Further, according to some example versions of the present invention, as shown in Fig. 25, the apparatus for a first network entity comprises means for receiving (251), from a second network entity, a request for data or training or analytics information, the request including information regarding a preferred level of trustworthiness of the data or training or analytics information, means for forwarding (252) the information regarding the preferred level of trustworthiness of the data or training or analytics information via a third network entity to a fourth network entity, means for receiving (253), from the fourth network entity, trustworthiness configurations for an inference stage, means for preparing (254) inference data satisfying the preferred level of trustworthiness using the trustworthiness configurations for the inference stage, and means for reporting (255), to the second network entity, the requested data or training or analytics information according to the preferred level of trustworthiness of the data or training or analytics information.

Additionally, according to some example versions of the present invention, there is provided a computer program comprising instructions, which, when executed by an apparatus for a first network entity, cause the apparatus to perform receiving, from a second network entity, a request for data or training or analytics information, the request including information regarding a preferred level of trustworthiness of the data or training or analytics information, translating the received level of trustworthiness into trustworthiness of data or training or analytics configurations, and reporting the trustworthiness of data or training or analytics configurations to the second entity.

Additionally, according to some example versions of the present invention, there is provided a computer program comprising instructions, which, when executed by an apparatus for a first network entity, cause the apparatus to perform receiving, from a second network entity, a request for data or training or analytics information, the request including information regarding a preferred level of trustworthiness of the data or training or analytics information, forwarding the information regarding the preferred level of trustworthiness of the data or training or analytics information via a third network entity to a fourth network entity, receiving, from the fourth network entity, trustworthiness configurations for an inference stage, preparing inference data satisfying the preferred level of trustworthiness using the trustworthiness configurations for the inference stage, and reporting, to the second network entity, the requested data or training or analytics information according to the preferred level of trustworthiness of the data or training or analytics information.

Furthermore, the present invention may be implement by an apparatus for a first network entity comprising respective circuitry for preforming the above-described processing.

That is, according to some example versions of the present invention. there is provided an apparatus for a first network entity, comprising a reception circuitry for receiving, from a second network entity, a request for data or training or analytics information, the request including information regarding a preferred level of trustworthiness of the data or training or analytics information, a translation circuitry for translating the received level of trustworthiness into trustworthiness of data or training or analytics configurations, and a reporting circuitry for reporting the trustworthiness of data or training or analytics configurations to the second entity.

Further, according to some example versions of the present invention, there is provided an apparatus for a first network entity, comprising a reception circuitry for receiving, from a second network entity, a request for data or training or analytics information, the request including information regarding a preferred level of trustworthiness of the data or training or analytics information, a forwarding circuitry for forwarding the information regarding the preferred level of trustworthiness of the data or training or analytics information via a third network entity to a fourth network entity, a reception circuitry for receiving, from the fourth network entity, trustworthiness configurations for an inference stage, a preparing circuitry for preparing inference data satisfying the preferred level of trustworthiness using the trustworthiness configurations for the inference stage, and a reporting circuitry for reporting, to the second network entity, the requested data or training or analytics information according to the preferred level of trustworthiness of the data or training or analytics information.

For further details regarding the functions of the apparatus and the computer program, reference is made to the above description of the methods according to some example versions of the present invention, as described in connection with Figs. 21 and 22.

In the foregoing exemplary description of the apparatus, only the units/means that are relevant for understanding the principles of the invention have been described using functional blocks. The apparatus may comprise further units/means that are necessary for its respective operation, respectively. However, a description of these units/means is omitted in this specification. The arrangement of the functional blocks of the apparatus is not to be construed to limit the invention, and the functions may be performed by one block or further split into sub-blocks.

When in the foregoing description it is stated that the apparatus (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is to be construed to be equivalent to an expression such as "means for").

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware
      and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

For the purpose of the present invention as described herein above, it should be noted that
- method steps likely to be implemented as software code portions and being run using a processor at an apparatus (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the aspects/embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the aspects/embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components, APU (Accelerated Processor Unit), GPU (Graphics Processor Unit) or DSP (Digital Signal Processor) components;
- devices, units or means (e.g. the above-defined apparatuses, or any one of their respective units/means) can be implemented as individual devices, units or means, but this does not exclude that they are implemented in a distributed fashion throughout the system, as long as the functionality of the device, unit or means is preserved;
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

It is to be noted that the aspects/embodiments and general and specific examples described above are provided for illustrative purposes only and are in no way intended that the present invention is restricted thereto. Rather, it is the intention that all variations and modifications which fall within the scope of the appended claims are covered.

## Claims

1. A method for use in a first network entity, comprising:
receiving, from a second network entity, a request for data or training or analytics information, the request including information regarding a preferred level of trustworthiness of the data or training or analytics information;
translating the received level of trustworthiness into trustworthiness of data or training or analytics configurations,
reporting the trustworthiness of data or training or analytics configurations to the second entity.

2. The method according to claim 1, further comprising
registering, by the first network entity, its capabilities to receive the request for data or training or analytics information to a third network entity, the request including a preferred level of trustworthiness of the data or training or analytics information.

3. The method according to claim 1 or 2, further comprising
sending, by the first network entity, a request for discovering supported trustworthiness of data or training or analytics configurations to the second network entity, and
receiving information regarding the supported trustworthiness of data or training or analytics configurations from the second network entity.

4. The method according to any one of claims 1 to 3, wherein
the trustworthiness of data or training or analytics configurations include individual data and/or training and/or inference trustworthiness configurations.

5. The method according to any one of claims 1 to 4, wherein
the preferred level of trustworthiness of data or training or analytics configurations is associated to data and/or training and/or inference stage(s) of a machine learning pipeline.

6. The method according to any one of claims 1 to 5, wherein
the preferred level of trustworthiness of data or training or analytics configurations includes at least one of a preferred level of explainability, a preferred level of fairness, and a preferred level of robustness.

7. The method according to any one of claims 1 to 6, further comprising:
receiving explanations from the second network entity; and storing the received explanations in a database, wherein
the explanations are explanations related to a training dataset and explanations related to a model satisfying the preferred level of trustworthiness of data or training or analytics configurations, or
the explanations are explanations related to an inference dataset and explanations related to model inferences satisfying the preferred level of trustworthiness of data or training or analytics configurations.

8. The method according to any one of claims 2 to 7, wherein
the first entity is a trustworthiness logical function and the third entity is a network repository logical function in a mobile telecommunications network system.

9. The method according to any one of claims 1 to 8, wherein
the first entity is a trustworthiness logical function and the second entity is an analytics logical function in a mobile telecommunications network system.

10. The method according to any one of claims 1 to 8, wherein
the first entity is a trustworthiness logical function and the second entity is a model training logical function in a mobile telecommunications network system.

11. The method according to any one of claims 1 to 7, wherein
the first entity is a trustworthiness function and the second entity is a management data analytics function in a mobile telecommunications network system.

12. The method according to any one of claims 1 to 7, wherein
the first entity is a trustworthiness function and the second entity is an artificial intelligence/machine learning training producer in a mobile telecommunications network system.

13. A method for use in a first network entity, comprising:
receiving, from a second network entity, a request for data or training or analytics information, the request including information regarding a preferred level of trustworthiness of the data or training or analytics information,
forwarding the information regarding the preferred level of trustworthiness of the data or training or analytics information via a third network entity to a fourth network entity,
receiving, from the fourth network entity, trustworthiness configurations for an inference stage,
preparing inference data satisfying the preferred level of trustworthiness using the trustworthiness configurations for the inference stage, and
reporting, to the second network entity, the requested data or training or analytics information according to the preferred level of trustworthiness of the data or training or analytics information.

14. An apparatus comprising means for performing the method according to any one of claims 1 to 13.

15. A computer program comprising instructions, which, when executed by an apparatus, cause the apparatus to perform the method according to any one of claims 1 to 13.
